# EUROPEAN PATENT APPLICATION

(11) **EP 4 442 549 A1**
(43) Date of publication of application: **09.10.2024**
(21) Application number: 23204320.8
(22) Date of filing: 18.10.2023
(51) Int. Cl.: B62K 3/04, B62K 25/28

(54) **REAR TRIANGLE OF A TUBULAR BICYCLE FRAME**

(30) Priority: 05.04.2023 IT 202300006657
(71) Applicant: Cicli Pinarello S.r.l., 31020 Villorba TV (IT)
(72) Inventor: SCAPIN, Stefano, 35039 RIESE PIO X TV (IT)
(74) Representative: Modiano, Micaela Nadia

(57) **Abstract**

A rear triangle of a tubular bicycle frame, particularly with the classic diamond shape, which comprises a tubular structure (2) which defines at least one head tube (3) for connection to a front fork, a first, substantially horizontal tubular body (4), which is functionally connected to the head tube (3) and defines an inlet (5) for mounting a saddle post, and a second, oblique tubular body (6) and a third, vertical tubular body (7), which is functionally connected to the head tube (3) and supports a bottom bracket.

The rear triangle (1) is composed of a first half-triangle (9) and a distinct second half-triangle (10), each one composed of a pair of horizontal chain stays (11a, 11b) which at one end are rigidly connected to a pair of distinct oblique seat stays (12a, 12b) so as to define, for each one of said pairs of horizontal chain stays 11a, 12a and oblique seat stays 11b, 12b, a V-shape.

The upper (13a, 13b) and lower (14a, 14b) free ends of the pairs of horizontal chain stays and oblique seat stays (11a, 12a, 11b, 12b) are articulated to the third tubular body (7) so that they can oscillate.

## Description

The present invention relates to a rear triangle of a tubular bicycle frame, particularly having the classic diamond shape.

The frame of the bicycle is an essential part in that, in addition to playing the role of a supporting structure on which all the other parts of the bicycle are mounted, it is subject to continual stresses mainly caused by the loads introduced by the cyclist when pedaling, i.e. when the thrust made by the cyclist's legs on the pedal is converted to traction applied to the drive wheel by way of the transmission system, and to stresses caused by the unevenness of the terrain on which the bicycle is being ridden.

In particular for bicycles of the mountain bike type, the adoption is known of a system of suspensions, using shock absorbers, both at the front and at the rear, the function of which is to keep the wheels in contact with the ground on uneven surfaces, so as to ensure direction control in the front and traction in the rear, as well as to absorb violent shocks resulting from use.

The most common structure of bicycle frames is the "diamond" shape, structured with four tubular bodies (a head tube, a horizontal tube, a vertical tube and an oblique tube, also known as the "front triangle") which are joined at two points to a rear triangle to which the rear wheel is coupled (known simply as the "rear triangle"), composed of a pair of horizontal chain stays or forks, and a pair of oblique seat stays or forks, which are joined to each other so as to constitute a single body.

For the shock absorber to function correctly, it is necessary for the right side and the left side of the rear triangle to move perfectly synchronously, so transmitting a symmetric load to the frame.

It is also known to provide the rear triangle in a single piece, using an additional element, or lower bridge, which is arranged crosswise between the horizontal chain stays, proximate to the fulcrum with the oblique tube in the region proximate to the bottom bracket, and/or an element, or upper bridge, which is entirely similar to the lower bridge and is arranged between the oblique seat stays proximate to the connection to the upper end of the oblique tube.

The function of the rear triangle, paired with a suspension that for example connects it to the horizontal tube, is to allow an optimal behavior of the bicycle on the highly uneven terrain typical of off-road cycling, with the rear wheel "copying" the progression of the uneven ground and furthermore ensuring a sufficient dissipation of energy in the event of heavy impacts.

Making the rear triangle in a single piece presents several drawbacks: between the lower bridge and the join of the oblique tube with the vertical tube, a gap is created in which it is very easy for mud, stones and other solid elements to become lodged, which could harm and/or damage the frame and, in some cases, prevent the movement of the rear triangle.

In any case upper and lower bridges create regions where it is very easy for mud to build up and even hinder the free turning of the tire, in extreme cases even obstructing it.

As a partial solution to this drawback, it is known to make the rear triangle in two distinct pieces which are subsequently joined together in order to be mounted on the bicycle frame. However, this solution introduces a structural weak point at this joint, since generally this joint is a binding of carbon layups - for a carbon-fiber frame - and a weld point - for an aluminum frame - both of which are carried out at a later date.

It is also known, as a partial solution to the problem caused by the presence of the gap where mud, stones and other solid elements become lodged, to provide an adapted plastic or rubber insert which is placed in the gap between the lower bridge and the joint of the oblique tube with the vertical tube.

This solution too is not satisfactory besides implying an additional cost of production, assembly, and possible substitution or maintenance.

It is also known, as a partial solution to the problem caused by the imperfect turning of the tire, to increase the distance between the axle of the wheel on the rear triangle and the bottom bracket (known in the jargon as "chain stay length"): however, this entails an increase in the overall wheelbase of the bicycle, which causes a reduction in its agility.

The aim of the present invention is to eliminate the above-mentioned drawbacks, by providing a rear triangle for a tubular bicycle frame, particularly with the classic diamond shape, which can move synchronously, so transmitting a symmetric load to the frame.

Within this aim, an object of the present invention is to provide a rear triangle for a bicycle frame that can move optimally and which is therefore free from hindrances caused by the presence of regions prone to accumulation of mud or stones or other solid elements.

Another object is to obtain a rear triangle that also permits an optimal turning of the rear tire.

Another object of the invention is to provide a rear triangle that makes it possible to maintain a small overall wheelbase of the bicycle and therefore a small distance between the axle of the wheel on the rear triangle and the bottom bracket, thus increasing the agility and maneuverability of the bicycle.

Another object is to obtain a rear triangle in which tires of larger size can be mounted for the same length of the rear triangle, in order to ensure greater versatility of mounting.

Another object is to provide a rear triangle that can be obtained in a simpler manner at the production level and which is structurally strong.

Another object is to provide a rear triangle that is structurally simple and of low cost and can be made with the usual conventional plants.

This aim and these and other objects which will become better apparent hereinafter are achieved by a rear triangle of a tubular bicycle frame, which comprises a tubular structure which defines at least one head tube for connection to a front fork, a first, substantially horizontal tubular body, which is functionally connected to said head tube and defines an inlet for mounting a saddle post, a second, oblique tubular body, and a third, substantially vertical tubular body and a bottom bracket, characterized in that said rear triangle is composed of a first half-triangle and a distinct second half-triangle, each one composed of a pair of horizontal chain stays which at one end are rigidly connected to a pair of distinct oblique seat stays so as to define, for each one of said pairs of horizontal chain stays and oblique seat stays, a V-shape, the upper and lower free ends of which are articulated to said third tubular body so that they can oscillate.

Further characteristics and advantages of the invention will become better apparent from the detailed description of a particular, but not exclusive, embodiment, illustrated by way of non-limiting example in the accompanying drawings wherein:

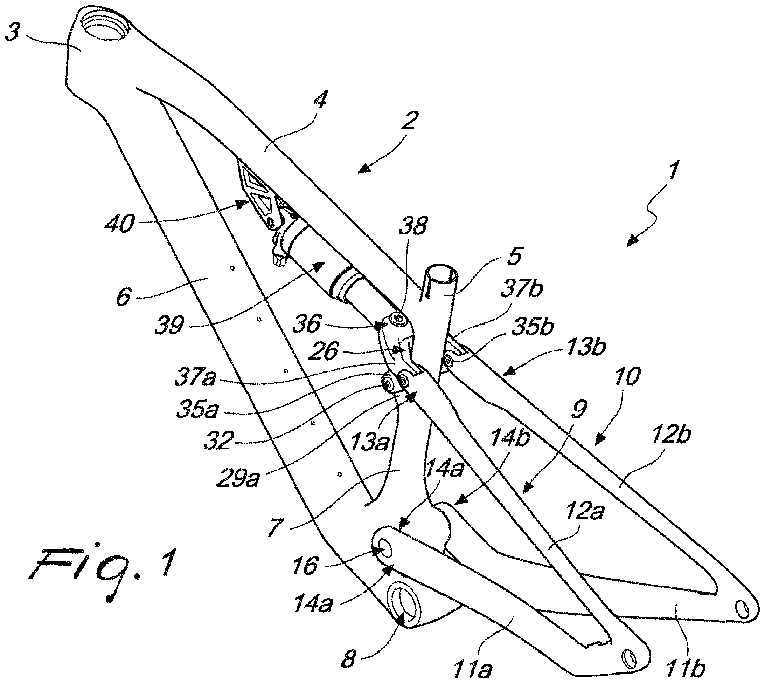

Figure 1 is a first perspective view of the frame;

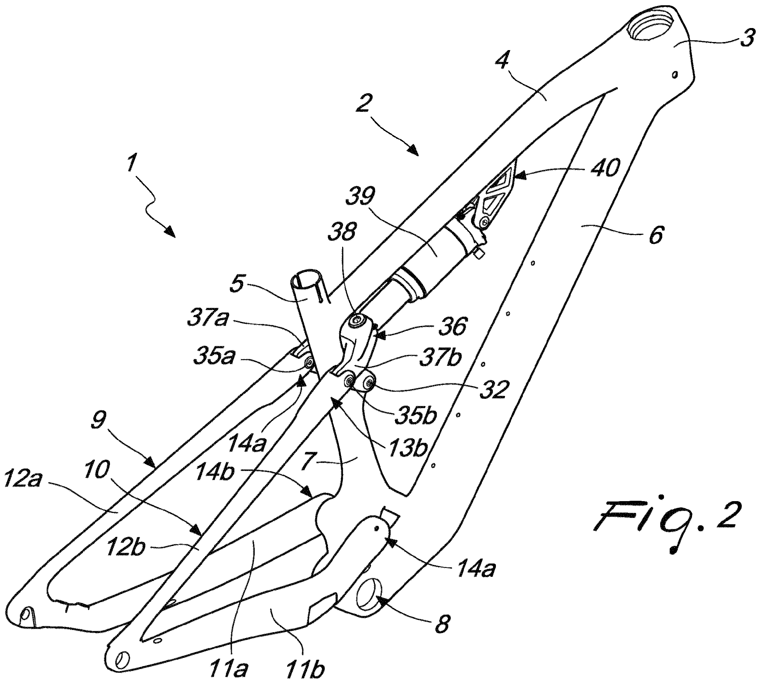

Figure 2 is a second perspective view of the frame;

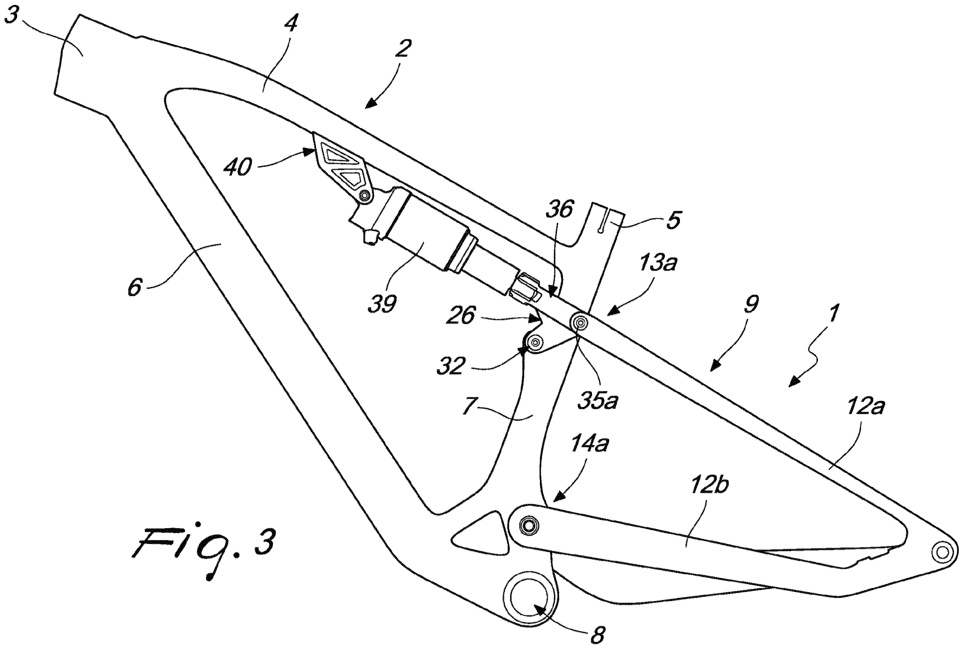

Figure 3 is a side view of the frame;

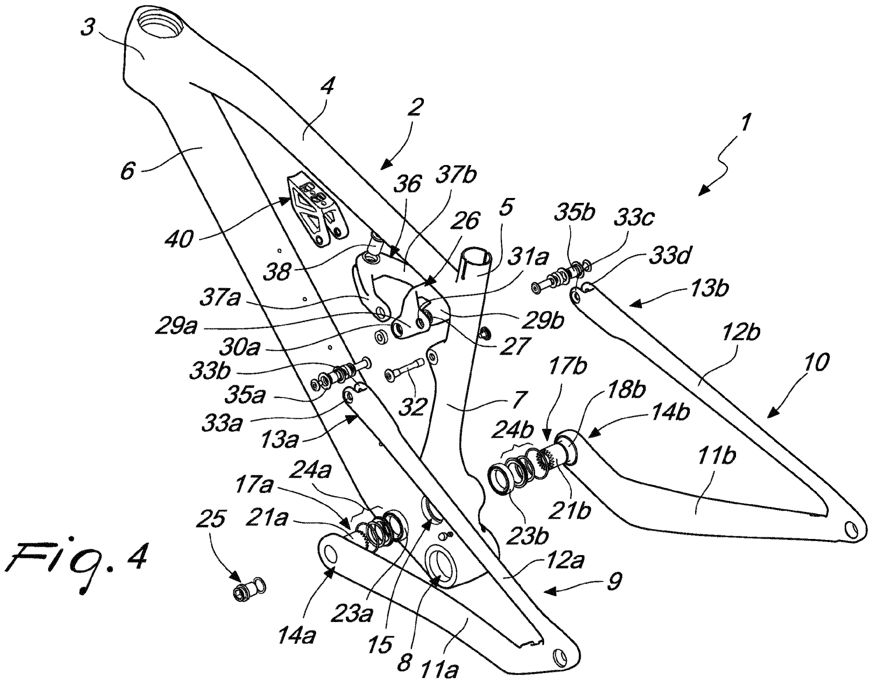

Figure 4 is an exploded view of the frame;

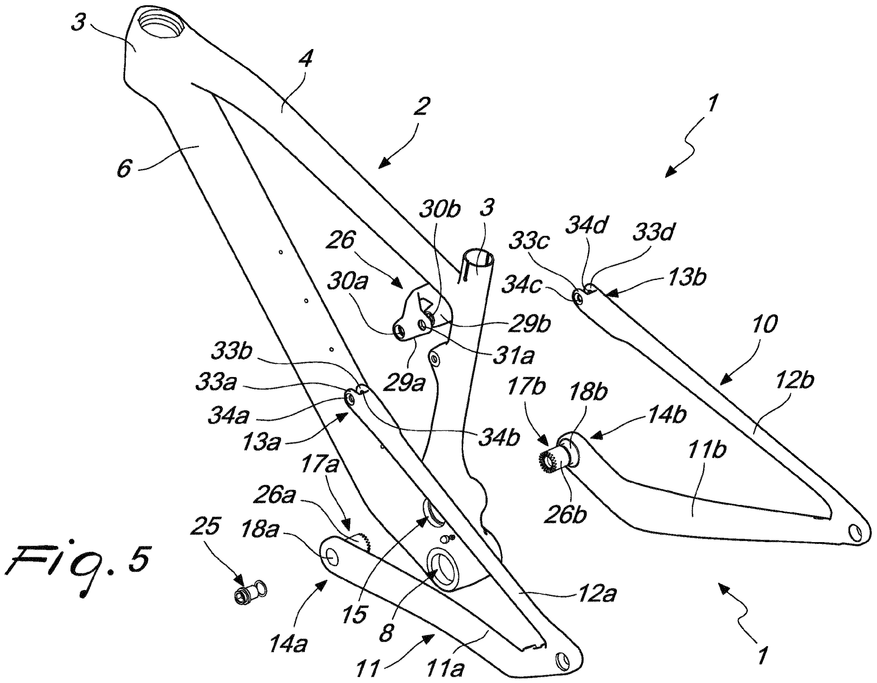

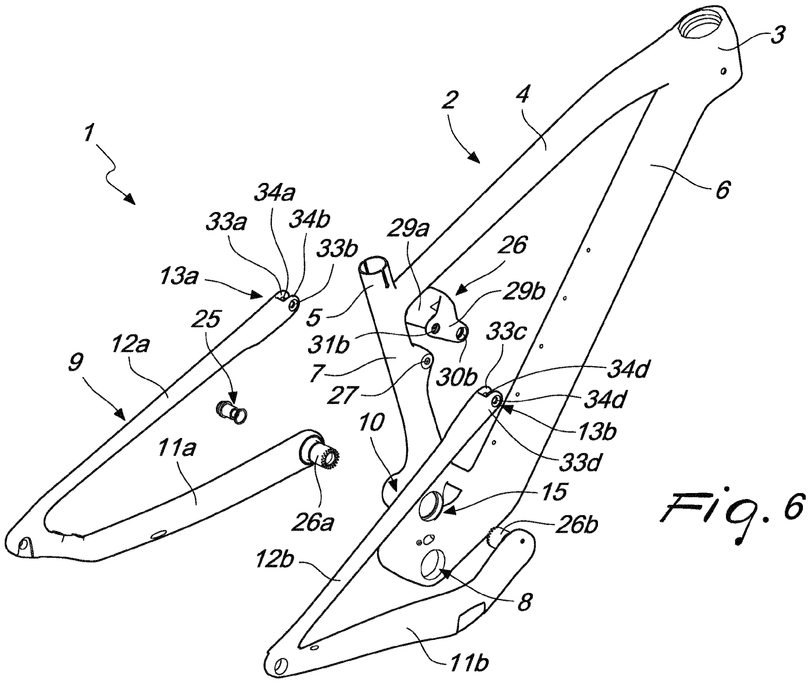

Figures 5 and 6 are exploded views of the frame without the shock absorber assembly;
Figure 7 is a cross-sectional view of the Hirth joint positioned in a region that lies above the bottom bracket.

In the embodiments illustrated, individual characteristics shown in relation to specific examples may in reality be interchanged with other, different characteristics, existing in other embodiments.

With reference to the figures, the reference numeral 1 generally designates a rear triangle of a tubular bicycle frame 2, which comprises a tubular structure which defines at least one head tube 3 for connection to a front fork (not shown), a first, substantially horizontal tubular body 4, which is functionally connected to the head tube 3 and defines an inlet 5 for mounting a saddle, and a second, oblique tubular body 6 and a third, vertical tubular body 7.

At the ends of the second, oblique tubular body 6 and the third, vertical tubular body 7, a first seat 8 is provided for a bottom bracket (not shown).

The first tubular body 4, the second tubular body 6 and the third tubular body 7 define the so-called front triangle of the tubular frame 2.

The rear triangle 1 is composed of a first half-triangle 9 and a distinct second half-triangle 10, substantially mutually mirror-symmetrical, each one composed of a pair of horizontal chain stays 11a, 11b which at one end are rigidly connected to a pair of distinct oblique seat stays 12a, 12b so as to define, for each one of the pairs of horizontal chain stays 11a, 12a and oblique seat stays 11b, 12b, a V-shape, the respective upper 13a, 13b and lower 14a, 14b free ends of which are articulated at distinct points to the third tubular body 7 so that they can oscillate.

The pairs of horizontal chain stays 11a, 12a and oblique seat stays 11b, 12b define the so-called rear triangle of the tubular frame 2.

Each one of the lower free ends 14a, 14b of the pairs of horizontal chain stays 11a, 11b is articulated, so that it can oscillate, to the second, oblique tubular body 7 in a region proximate to the first seat 8; the articulation occurs at a second seat 15, provided transversely with respect to the second, oblique tubular body 7, within which it is possible to arrange a joint 16, for example a Hirth-type joint, that is capable of transmitting torsion.

Hirth joints consist of a pair of sleeves or half-pivots 17a, 17b which are T-shaped in cross-section, the head 18a, 18b of which is keyed at a third seat 19a, 19b which is provided on the lower free ends 14a, 14b.

A screw 20 can be provided to interconnect one or both of the lower free ends 14a, 14b to the head 18a, 18b, in order to lock the connection between the components.

The stem 21a, 21b of the sleeves 17a, 17b has, at the free end, radial teeth 22a, 22b formed by grooves, milled or ground in the end face, which are capable of transmitting torsion.

Special bearings 23a, 23 and sealing rings 24a, 24b are also provided.

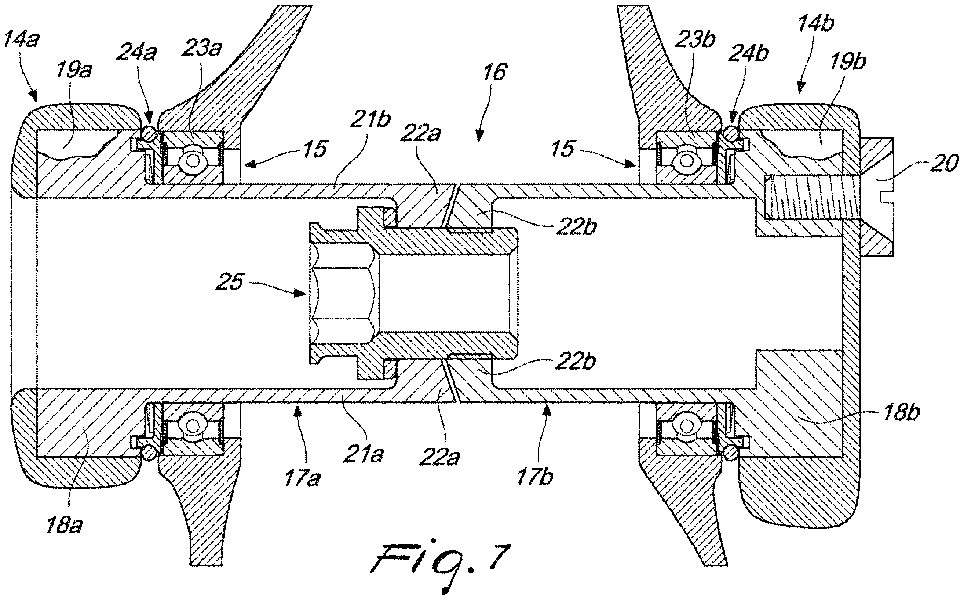

The coupling between the pair of sleeves or half-pivots 17a, 17b occurs by means of a locking screw 25 which affects and clamps the ends of the stems 21a, 21b with the radial teeth 22a, 22b, as shown in Figure 7.

It should be noted that the choice of the Hirth-type joint is a 'preferred' technical choice and it is possible to use any other coupling/interface that ensures a correct transmission of torsional loads between the two pairs of horizontal chain stays 11a, 12a and oblique seat stays 11b, 12b that constitute the rear triangle.

The upper free ends 13a, 13b of the pairs of oblique seat stays 12a, 12b on the other hand are articulated so that they can oscillate, by means of pivots or bushings or bearings or a rocker arm, to the third tubular body 7 proximate to the inlet 5.

In the above particular embodiment the articulation occurs by means of a rocker arm 26, which is constituted by a plate which is substantially C-shaped, so as to define first wings 29a, 29b that wrap around the third tubular body 7 in a region that lies below the inlet 5 where a fourth seat 27 is provided which is transverse to the third tubular body 7 for the insertion of a first pivot 28.

On each first wing 29a, 29b of the rocker arm 26 first holes 30a, 30b and second holes 31a, 31b are provided, which are mutually adjacent, the first holes 30a, 30b being arranged in axial alignment with the fourth seat 27 for pivoting to the third tubular body 7 by means of a second pivot 32.

The second holes 31a, 31b are provided in a region of the first wings 29a, 29b that is directed toward the inlet 5, the rocker arm being therefore allowed to oscillate in the direction of the head tube 3.

The upper free ends 13a, 13b of the oblique seat stays 12a, 12b are fork-shaped so as to define a pair of second wings 33a, 33b, 33c, 33d on which, along the same axis, pairs of third holes 34a, 34b, 34c, 34d are provided which are adapted to allow, by means of a pair of third pivots 35a, 35b, pivoting to the rocker arm 26 by arranging in advance, in axial alignment with each other, the third holes 34a, 34b, 34c, 34d with the second holes 31a, 31b and the first wings 29a, 29b between the second wings 33a, 33b, 33c, 33d.

Furthermore, a substantially V-shaped fork 36 interacts with the rocker arm 26, and its third wings 37a, 37b, which are perforated at one end, can be arranged between the second wings 33a, 33b, 33c, 33d of the upper free ends 13a, 13b of the oblique seat stays 12a, 12b and are articulated therein by means of the third pivots 35a, 35b.

At the vertex of the fork 36 it is possible, by means of a fourth pivot 38, to associate the first end of a piston 39, which constitutes a shock absorber, the second end of which is connected to a support 40 that can be coupled to the first tubular body 4.

Thus it has been found that the invention fully achieves the intended aim and objects, a rear triangle of a tubular bicycle frame, particularly with the classic diamond shape, having been obtained which can move synchronously, so transmitting a symmetric load to the frame, while being at the same time free from hindrances caused by the presence of regions prone to accumulation of mud or stones or other solid elements.

The rear triangle furthermore makes it possible to achieve an optimal turning of the rear tire and to maintain a reduced overall wheelbase of the bicycle and therefore a reduced distance between the axle of the wheel on the rear triangle and the bottom bracket, thus increasing the agility and maneuverability of the bicycle.

The rear triangle also makes it possible to mount tires of larger size for the same length of the rear triangle, in order to ensure greater versatility of mounting.

Finally the rear triangle is structurally simple and of low cost.

The invention is susceptible of numerous modifications and variations, all of which are within the scope of the appended claims.

Naturally the materials used as well as the dimensions of the individual components of the invention may be more relevant according to specific requirements.

The characteristics indicated above as advantageous, convenient or the like, may also be missing or be substituted by equivalent characteristics.

The disclosures in Italian Patent Application No. 102023000006657 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A rear triangle (1) of a tubular bicycle frame (2), which comprises a tubular structure which defines at least one head tube (3) for connection to a front fork, a first, substantially horizontal tubular body (4), which is functionally connected to said head tube (3) and defines an inlet (5) for mounting a saddle post, a second, oblique tubular body (6), and a third, substantially vertical tubular body (7) and a bottom bracket, **characterized in that** said rear triangle (1) is composed of a first half-triangle (9) and a distinct second half-triangle (10), each one composed of a pair of horizontal chain stays (11a, 11b) which at one end are rigidly connected to a pair of distinct oblique seat stays (12a, 12b) so as to define, for each one of said pairs of horizontal chain stays (11a, 12a) and oblique seat stays (11b, 12b), a V-shape, upper (13a, 13b) and lower (14a, 14b) free ends of which are articulated to said third tubular body (7) so that they can oscillate.

2. The rear triangle (1) according to claim 1, **characterized in that** said upper free ends (13a, 13b) of said pairs of oblique seat stays (12a, 12b) are articulated, so that they can oscillate, by means of pivots or bushings or bearings or a rocker arm (26), to said third tubular body (7) proximate to said inlet (5).

3. The rear triangle (1) according to claim 1, **characterized in that** said lower free ends (14a, 14b) of said pairs of horizontal chain stays (11a, 11b) are articulated so that they can oscillate on said third tubular body (7) in a region proximate to said bottom bracket by means of a joint (16) which is capable of transmitting torsion and is located in a dedicated second seat (15).

4. The rear triangle (1) according to claim 1, **characterized in that** said free ends of said pairs of horizontal chain stays (11a, 11b) are articulated so that they can oscillate on said third tubular body (7) in a region proximate to said bottom bracket by means of a joint (16) for transmitting torsion, such as a Hirth-type joint positioned in said second seat (15) which is provided transversely with respect to said second, oblique tubular body (7).

5. The rear triangle (1) according to claim 3, **characterized in that** said joint (16) consists of a pair of sleeves or half-pivots (17a, 17b) which are T-shaped in cross-section, the head (18a, 18b) of which is keyed at a third seat (19a, 19b) which is provided on said lower free ends (14a, 14b), a screw (20) being provided to interconnect one or both of said lower free ends (14a, 14b) to said head (18a, 18b), said pair of sleeves or half-pivots (17a, 17b) being provided with a stem (21a, 21b) which has, at the free end, radial teeth (22a, 22b) formed by grooves, milled or ground in the end face, which are capable of transmitting torsion, the coupling between said pair of sleeves or half-pivots (17a, 17b) occurring by means of a locking screw (25) which affects and clamps the ends of said stems (21a, 21b).

6. The rear triangle (1) according to claims 1 and 2, **characterized in that** the articulation of said upper free ends (13a, 13b) of said pairs of oblique seat stays (12a, 12b) to said third tubular body (7) occurs by means of said rocker arm (26), which is constituted by a plate which is substantially C-shaped, so as to define first wings (29a, 29b) that wrap around said third tubular body (7) in a region that lies below said inlet (5) where a fourth seat (27) is provided which is transverse to said third tubular body (7) for the insertion of a first pivot (28).

7. The rear triangle (1) according to one or more of the preceding claims, **characterized in that** on each of said first wings (29a, 29b) of said rocker arm (26) first holes (30a, 30b) and second holes (31a, 31b) are provided, which are mutually adjacent, said first holes (30a, 30b) being arranged in axial alignment with said fourth seat (27) for pivoting to said third tubular body (7) by means of a second pivot (32).

8. The rear triangle (1) according to one or more of the preceding claims, **characterized in that** said second holes (31a, 31b) are provided in a region of said first wings (29a, 29b) that is directed toward said inlet (5), said rocker arm (26) being allowed to oscillate in the direction of said head tube (3).

9. The rear triangle (1) according to one or more of the preceding claims, **characterized in that** said upper free ends (13a, 13b) of said oblique seat stays (12a, 12b) are fork-shaped so as to define a pair of second wings (33a, 33b, 33c, 33d) on which, along the same axis, pairs of third holes (34a, 34b, 34c, 34d) are provided which are adapted to allow, by means of a pair of third pivots (35a, 35b), pivoting to said rocker arm (26) by arranging in advance, in axial alignment with each other, said third holes (34a, 34b, 34c, 34d) with said second holes (31a, 31b) and said first wings (29a, 29b) between said second wings (33a, 33b, 33c, 33d).

10. The rear triangle (1) according to one or more of the preceding claims, **characterized in that** a substantially V-shaped fork (36) interacts with said rocker arm (26), and third wings (37a, 37b) thereof, which are perforated at one end, can be arranged between said second wings (33a, 33b, 33c, 33d) of said upper free ends (13a, 13b) of said oblique seat stays (12a, 12b) and are articulated therein by means of said third pivots (35a, 35b), at the vertex of said fork (36), by means of a fourth pivot (38), a first end of a piston (39) is associated which constitutes a shock absorber and is connected, at a second end thereof, to a support (40) that can be coupled to said first tubular body (4).
